# EUROPEAN PATENT APPLICATION

(11) **EP 4 786 944 A1**
(43) Date of publication of application: **05.08.2026**
(21) Application number: 26153558.7
(22) Date of filing: 22.01.2026
(51) Int. Cl.: G01M 11/00

(54) **OPTICAL FIBER CHARACTERISTIC MEASUREMENT APPARATUS AND OPTICAL FIBER CHARACTERISTIC MEASUREMENT METHOD**

(30) Priority: 03.02.2025 JP 2025016381
(71) Applicant: Yokogawa Electric Corporation, Musashino-shi, Tokyo 180-8750 (JP)
(72) Inventor: SUZUKI, Yuta, Musashino-shi, Tokyo, 180-8750 (JP); TEZUKA, Shin-ichirou, Musashino-shi, Tokyo, 180-8750 (JP); HONMA, Masayoshi, Musashino-shi, Tokyo, 180-8750 (JP)
(74) Representative: Zimmermann, Tankred Klaus

(57) **Abstract**

Brillouin gain spectra are measured at low cost. An optical fiber characteristic measurement apparatus 10 according to the present disclosure measures the characteristics of an optical fiber 1 by the Brillouin optical correlation domain reflectometry method. The optical fiber characteristic measurement apparatus 10 includes a local oscillator 122 that generates a sinusoidal electrical signal, a mixer 121 that receives Brillouin gain spectra resulting from Brillouin scattering in the optical fiber 1 and the sinusoidal electrical signal generated by the local oscillator 122 and outputs down-converted Brillouin gain spectra, and a frequency analyzer 123 that measures the down-converted Brillouin gain spectra.

## Description

### CROSS-REFERENCE TO RELATED APPLICATION

This application claims priority to Japanese Patent Application No. 2025-016381, filed on February 3, 2025, the entire contents of which are incorporated herein by reference.

### TECHNICAL FIELD

The present disclosure relates to an optical fiber characteristic measurement apparatus and an optical fiber characteristic measurement method.

### BACKGROUND

Conventionally, as optical fiber characteristic measurement apparatuses, optical fiber characteristic measurement apparatuses that measure the characteristics of optical fibers by the Brillouin optical correlation domain reflectometry (BOCDR) method have been known. For example, Patent Literature (PTL) 1 discloses an optical fiber characteristic measurement apparatus using the BOCDR method.

The BOCDR optical fiber characteristic measurement apparatus can measure temperature and strain at each position along an optical fiber, by measuring Brillouin-scattered light and a Brillouin frequency shift (BFS), which is the peak frequency of a Brillouin gain spectrum (BGS) resulting from Brillouin scattering.

### CITATION LIST

### Patent Literature

PTL 1: JP 6773091 B2

### SUMMARY

Brillouin gain spectra typically occur in a frequency band of approximately 11 GHz. To measure the Brillouin gain spectra, a frequency analyzer capable of measuring extremely high frequencies such as 11 GHz is required.

However, the frequency analyzer capable of measuring high frequencies such as 11 GHz is generally expensive, so it is difficult to measure the Brillouin gain spectra at low cost.

An object of the present disclosure is to provide an optical fiber characteristic measurement apparatus and an optical fiber characteristic measurement method that can measure Brillouin gain spectra at low cost.
[1] An optical fiber characteristic measurement apparatus configured to measure the characteristics of an optical fiber by the Brillouin optical correlation domain reflectometry method, the optical fiber characteristic measurement apparatus including:
   a local oscillator configured to generate a sinusoidal electrical signal;
   a mixer configured to receive a Brillouin gain spectrum resulting from Brillouin scattering in the optical fiber and the sinusoidal electrical signal generated by the local oscillator, and output a down-converted Brillouin gain spectrum; and
   a frequency analyzer configured to measure the down-converted Brillouin gain spectrum.
   Such an optical fiber characteristic measurement apparatus can measure the Brillouin gain spectrum at low cost.
[2] In the optical fiber characteristic measurement apparatus described in [1] above, the frequency analyzer may be configured to measure a Brillouin frequency shift that is the peak frequency of the down-converted Brillouin gain spectrum.
   This allows the temperature and strain of the optical fiber to be measured.
[3] In the optical fiber characteristic measurement apparatus described in [1] or [2] above, the Brillouin frequency shift that is the peak frequency of the down-converted Brillouin gain spectrum may be a frequency of 10 MHz or more and 2 GHz or less.
   This allows the frequency analyzer to be inexpensive.
[4] An optical fiber characteristic measurement method for measuring the characteristics of an optical fiber by the Brillouin optical correlation domain reflectometry method, the optical fiber characteristic measurement method including:
   inputting, to a mixer, a Brillouin gain spectrum resulting from Brillouin scattering in the optical fiber and a sinusoidal electrical signal generated by a local oscillator, and outputting a down-converted Brillouin gain spectrum; and
   measuring the down-converted Brillouin gain spectrum.
   Such an optical fiber characteristic measurement method can measure the Brillouin gain spectrum at low cost.
[5] In the optical fiber characteristic measurement method described in [4] above, the measuring of the down-converted Brillouin gain spectrum includes measuring a Brillouin frequency shift that is the peak frequency of the down-converted Brillouin gain spectrum.
   This allows the temperature and strain of the optical fiber to be measured.
[6] In the optical fiber characteristic measurement method described in [4] or [5] above, the Brillouin frequency shift that is the peak frequency of the down-converted Brillouin gain spectrum is a frequency of 10 MHz or more and 2 GHz or less.
   This allows the frequency analyzer to be inexpensive.

According to the present disclosure, it is possible to provide an optical fiber characteristic measurement apparatus and an optical fiber characteristic measurement method that can measure Brillouin gain spectra at low cost.

### BRIEF DESCRIPTION OF THE DRAWINGS

In the accompanying drawings:
FIG. 1 is a diagram illustrating a schematic configuration of an optical fiber characteristic measurement apparatus according to an embodiment of the present disclosure;
FIG. 2 is a conceptual diagram of Brillouin gain spectra; and
FIG. 3 is a diagram illustrating a schematic configuration of an optical fiber characteristic measurement apparatus according to a comparative example.

### DETAILED DESCRIPTION

An embodiment of the present disclosure will be described below, with reference to the drawings.

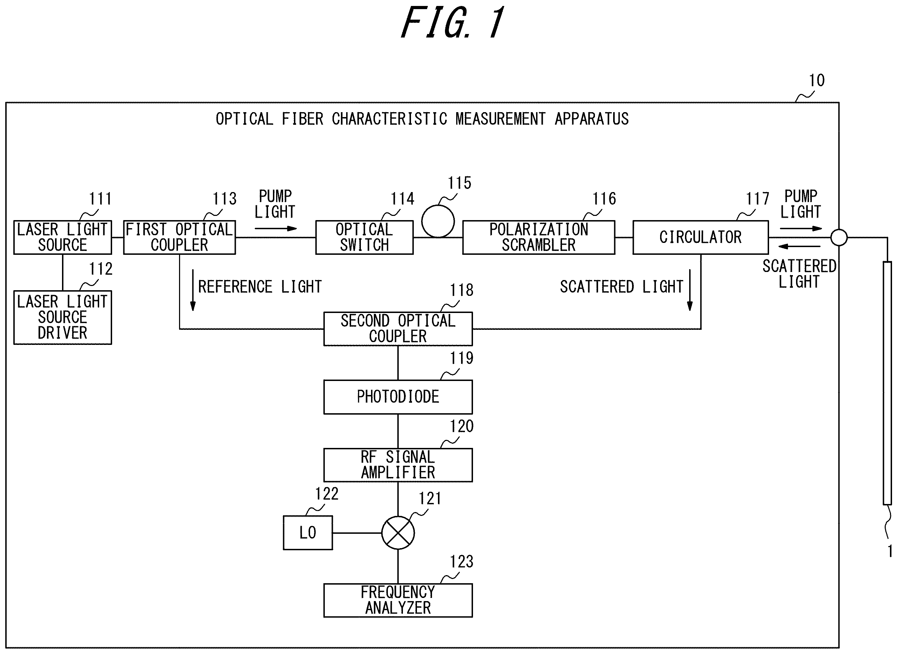

FIG. 1 is a diagram illustrating a schematic configuration of an optical fiber characteristic measurement apparatus 10 according to the embodiment of the present disclosure. The optical fiber characteristic measurement apparatus 10 is an apparatus that measures the characteristics of an optical fiber 1, which is an object to be measured, by the Brillouin optical correlation domain reflectometry (BOCDR) method.

The optical fiber characteristic measurement apparatus 10 includes a laser light source 111, a laser light source driver 112, a first optical coupler 113, an optical switch 114, a delay fiber 115, a polarization scrambler 116, a circulator 117, a second optical coupler 118, a photodiode 119, an radio frequency (RF) signal amplifier 120, a mixer 121, a local oscillator (LO) 122, and a frequency analyzer 123.

The laser light source 111 outputs laser light. The laser light source 111 may be, for example, a laser diode. The laser light source 111 can output frequency-modulated laser light. The laser light output from the laser light source 111 is frequency-modulated by the laser light source driver 112.

The laser light source 111 outputs the frequency-modulated laser light to the first optical coupler 113.

The laser light source driver 112 frequency-modulates the laser light output from the laser light source 111 by supplying a sinusoidal signal to the laser light source 111. The laser light source driver 112 may be a circuit of any configuration that can frequency-modulate the laser light output from the laser light source 111.

The first optical coupler 113 splits the laser light supplied from the laser light source 111 into pump light and reference light. The first optical coupler 113 outputs the pump light to the optical switch 114. The first optical coupler 113 outputs the reference light to the second optical coupler 118.

The optical switch 114 chops the pump light supplied from the first optical coupler 113 to generate pulsed light. The optical switch 114 outputs the pump light, which has been chopped into the pulsed light, to the delay fiber 115.

The delay fiber 115 delays the pump light supplied from the optical switch 114, and outputs the delayed pump light to the polarization scrambler 116.

The polarization scrambler 116 converts the pump light supplied from the delay fiber 115 into an unpolarized state, and outputs the unpolarized pump light to the circulator 117.

The circulator 117 emits the pump light supplied from the polarization scrambler 116 to the optical fiber 1 to be measured. When the pump light is emitted to the optical fiber 1, the optical fiber 1 generates Brillouin scattered light. The circulator 117 outputs the Brillouin scattered light incident from the optical fiber 1 to the second optical coupler 118.

The second optical coupler 118 combines the Brillouin scattered light supplied from the circulator 117 with the reference light supplied from the first optical coupler 113, and outputs the combined light to the photodiode 119.

The photodiode 119 receives the combined light supplied from the second optical coupler 118 and performs heterodyne detection. The photodiode 119 converts the received light into an electrical signal, and outputs the electrical signal to the RF signal amplifier 120.

The RF signal amplifier 120 amplifies the electrical signal supplied from the photodiode 119, and outputs the amplified electrical signal to the mixer 121. The electrical signal supplied from the photodiode 119 to the RF signal amplifier 120 contains Brillouin gain spectra resulting from Brillouin scattering. The Brillouin gain spectra typically occur in a frequency band of approximately 11 GHz.

To the mixer 121, the electrical signal supplied from the RF signal amplifier 120 and a sinusoidal electrical signal supplied from the local oscillator 122 are input. The electrical signal supplied from the RF signal amplifier 120 contains the Brillouin gain spectra resulting from Brillouin scattering. The Brillouin gain spectra typically occur in a frequency band of approximately 11 GHz. That is, the Brillouin gain spectra resulting from Brillouin scattering are input to the mixer 121 from the RF signal amplifier 120, and the sinusoidal electrical signal is also input thereto from the local oscillator 122.

The local oscillator 122 generates a sinusoidal electrical signal and supplies the sinusoidal electrical signal to the mixer 121 . The local oscillator 122 may be any circuit capable of generating a sinusoidal electrical signal. The frequency of the sinusoidal electrical signal generated by the local oscillator 122 may be, for example, about 10 GHz.

When the electrical signal containing the Brillouin gain spectra is input from the RF signal amplifier 120 and the sinusoidal electrical signal is input from the local oscillator 122, the mixer 121 outputs an electrical signal containing down-converted Brillouin gain spectra. Here, the Brillouin gain spectra input from the RF signal amplifier 120 are approximately centered at 11 GHz. The frequency of the sinusoidal electrical signal input from the local oscillator 122 is, for example, about 10 GHz. In this case, the frequency band of the down-converted Brillouin gain spectra output from the mixer 121 is about several hundred MHz to 1 GHz.

The frequency analyzer 123 measures the electrical signal, which contains the down-converted Brillouin gain spectra, supplied from the mixer 121.

Upon measuring the down-converted Brillouin gain spectra, the frequency analyzer 123 measures Brillouin frequency shifts, which correspond to the peak frequencies of the down-converted Brillouin gain spectra.

The Brillouin frequency shifts depend linearly on the temperature and strain of the optical fiber 1 to be measured, and therefore the frequency analyzer 123 can measure the temperature and strain of the optical fiber 1 by measuring the Brillouin frequency shifts.

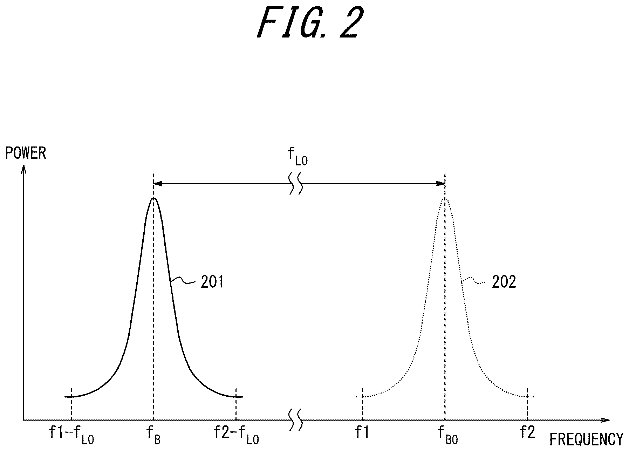

FIG. 2 illustrates a conceptual diagram of a Brillouin gain spectrum output from the mixer 121 and a Brillouin gain spectrum input to the mixer 121.

The Brillouin gain spectrum 201 illustrated on the left side in FIG. 2 corresponds to a down-converted Brillouin gain spectrum output from the mixer 121. The Brillouin gain spectrum 202 illustrated on the right side in FIG. 2 corresponds to a Brillouin gain spectrum input to the mixer 121.

The Brillouin gain spectrum 202 is in a frequency band of approximately 11 GHz, as with Brillouin gain spectra measured by a general BOCDR optical fiber characteristic measurement apparatus. Therefore, the peak frequency f_{B0} of the Brillouin gain spectrum 202 is approximately 11 GHz.

The Brillouin gain spectrum 201 is obtained by down-converting the Brillouin gain spectrum 202 in the mixer 121 using the frequency f_{LO} of the sinusoidal electrical signal output from the local oscillator 122. For example, when f_{LO} is 10 GHz, the frequency band of the Brillouin gain spectrum 201 is 10 GHz lower than the frequency band of the Brillouin gain spectrum 202.

Upon measuring the Brillouin gain spectrum 201 output from the mixer 121, the frequency analyzer 123 measures a Brillouin frequency shift f_{B}, which is the peak frequency of the Brillouin gain spectrum 201. In the example illustrated in FIG. 2, f_{B}=f_{B0}-f_{LO}. For example, when f_{LO} is 10 GHz, the Brillouin shift frequency f_{B} is about several hundred MHz to 1 GHz.

The frequency f_{LO} of the sinusoidal electrical signal output from the local oscillator 122 may be set to any value, but may be set, for example, so that the Brillouin shift frequency f_{B} is 10 MHz or more and 2 GHz or less. When the frequency band measured by the frequency analyzer 123 is, for example, about 10 MHz or more and 2 GHz or less, the frequency analyzer 123 can be configured using an inexpensive frequency analyzer.

Furthermore, when the frequency band of the Brillouin gain spectrum 202 is f1 to f2 as illustrated in FIG. 2, f_{LO} may be set to satisfy f1-f_{LO}>0. This makes it possible to prevent aliasing from occurring due to f1-f_{LO} becoming a negative frequency.

The frequency analyzer 123 can measure the temperature and strain of the optical fiber 1 by measuring the Brillouin frequency shift f_{B}.

The optical fiber characteristic measurement apparatus 10 according to the embodiment described above can measure Brillouin gain spectra at low cost. More specifically, the optical fiber characteristic measurement apparatus 10 is an apparatus that measures the characteristics of the optical fiber 1 using the Brillouin optical correlation domain reflectometry method, and includes the local oscillator 122 that generates a sinusoidal electrical signal, the mixer 121, and the frequency analyzer 123. Brillouin gain spectra resulting from Brillouin scattering in the optical fiber 1 and the sinusoidal electrical signal generated by the local oscillator 122 are input to the mixer 121, and the mixer 121 outputs down-converted Brillouin gain spectra. The frequency analyzer 123 then measures the Brillouin gain spectra down-converted by the mixer 121. As described above, the frequency analyzer 123 measures the down-converted Brillouin gain spectra. The frequency band of the down-converted Brillouin gain spectra is about several hundred MHz to 1 GHz, which is much lower than the frequency band of the Brillouin gain spectra before down-conversion, i.e., about 11 GHz. Therefore, the optical fiber characteristic measurement apparatus 10 according to the embodiment allows the frequency analyzer 123 to be inexpensive. Therefore, the optical fiber characteristic measurement apparatus 10 according to the embodiment can measure the Brillouin gain spectra at low cost.

### (Comparative Example)

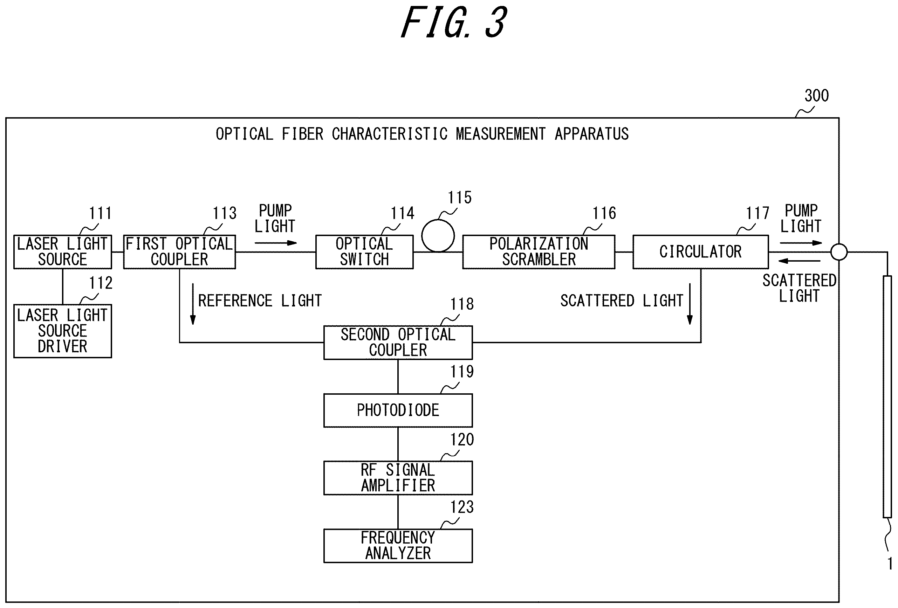

FIG. 3 is a diagram illustrating a schematic configuration of an optical fiber characteristic measurement apparatus 300 according to a comparative example. The optical fiber characteristic measurement apparatus 300 according to the comparative example includes a laser light source 111, a laser light source driver 112, a first optical coupler 113, an optical switch 114, a delay fiber 115, a polarization scrambler 116, a circulator 117, a second optical coupler 118, a photodiode 119, an RF signal amplifier 120, and a frequency analyzer 123.

The optical fiber characteristic measurement apparatus 300 according to the comparative example differs from the optical fiber characteristic measurement apparatus 10 according to the present embodiment illustrated in FIG. 1 in terms of not including a mixer 121 and a local oscillator 122.

Since the optical fiber characteristic measurement apparatus 300 according to the comparative example does not include a mixer 121 and a local oscillator 122, the frequency band of Brillouin gain spectra measured by the frequency analyzer 123 is about 11 GHz. In order to measure such high frequencies, the frequency analyzer 123 must be configured using an expensive frequency analyzer. Moreover, a frequency analyzer capable of measuring such high frequencies is generally large in size.

In contrast to this, in the optical fiber characteristic measurement apparatus 10 according to the present embodiment illustrated in FIG. 1, the frequency analyzer 123 measures the Brillouin gain spectra down-converted by the mixer 121. Since the frequency band of the down-converted Brillouin gain spectra is about several hundred MHz to 1 GHz, in the configuration of the optical fiber characteristic measurement apparatus 10 according to the present embodiment, the inexpensive frequency analyzer 123 can measure the down-converted Brillouin gain spectra. Furthermore, the frequency analyzer 123 can be smaller in size.

It is apparent to those skilled in the art that the present disclosure can be embodied in certain other forms than the above-described embodiment without departing from the spirit or essential characteristics thereof. Accordingly, the foregoing description is exemplary and not limitation. The scope of the disclosure is defined by the appended claims, not by the foregoing description. Any modifications that fall within the range of equivalents are included therein.

For example, the arrangement, number, and the like of the respective components described above are not limited to those illustrated in the above description and drawings. The arrangement, number, and the like of the respective components may be configured freely as long as the functions thereof can be realized.

## Claims

1. . An optical fiber characteristic measurement apparatus configured to measure a characteristic of an optical fiber by a Brillouin optical correlation domain reflectometry method, the optical fiber characteristic measurement apparatus comprising:
a local oscillator configured to generate a sinusoidal electrical signal;
a mixer configured to receive a Brillouin gain spectrum resulting from Brillouin scattering in the optical fiber and the sinusoidal electrical signal generated by the local oscillator, and output a down-converted Brillouin gain spectrum; and
a frequency analyzer configured to measure the down-converted Brillouin gain spectrum.

2. . The optical fiber characteristic measurement apparatus according to claim 1, wherein the frequency analyzer is configured to measure a Brillouin frequency shift that is a peak frequency of the down-converted Brillouin gain spectrum.

3. . The optical fiber characteristic measurement apparatus according to claim 2, wherein the Brillouin frequency shift that is the peak frequency of the down-converted Brillouin gain spectrum is a frequency of 10 MHz or more and 2 GHz or less.

4. . An optical fiber characteristic measurement method for measuring a characteristic of an optical fiber by a Brillouin optical correlation domain reflectometry method, the optical fiber characteristic measurement method comprising:
inputting, to a mixer, a Brillouin gain spectrum resulting from Brillouin scattering in the optical fiber and a sinusoidal electrical signal generated by a local oscillator, and outputting a down-converted Brillouin gain spectrum; and
measuring the down-converted Brillouin gain spectrum.

5. . The optical fiber characteristic measurement method according to claim 4, wherein the measuring of the down-converted Brillouin gain spectrum includes measuring a Brillouin frequency shift that is a peak frequency of the down-converted Brillouin gain spectrum.

6. . The optical fiber characteristic measurement method according to claim 5, wherein the Brillouin frequency shift that is the peak frequency of the down-converted Brillouin gain spectrum is a frequency of 10 MHz or more and 2 GHz or less.
